# EUROPÄISCHE PATENTSCHRIFT

(11) **EP 2 738 391 B1**
(45) Veröffentlichungstag und Bekanntmachung des Hinweises auf die Patenterteilung: **18.01.2017**
(21) Anmeldenummer: 12194670.1
(22) Anmeldetag: 28.11.2012
(51) Int. Cl.: F04D 13/06, F04D 29/62, H02K 3/52, H02K 5/128

(54) **Elektrische Kühlmittelpumpe**
Electric coolant pump
Pompe à liquide de refroidissement électrique

(43) Veröffentlichungstag der Anmeldung: 04.06.2014
(73) Patentinhaber: Pierburg Pump Technology GmbH, 41460 Neuss (DE)
(72) Erfinder: Zacher, Wolfgang, 04720 Döbeln (DE); Patzner, Rene, 09337 Hohenstein-Ernstthal (DE)
(74) Vertreter: Patentanwälte ter Smitten Eberlein Rütten Partnerschaftsgesellschaft

(56) Entgegenhaltungen:
- EP-A2- 1 617 543
- WO-A1-01/91266
- DE-A1- 4 441 378
- DE-A1- 19 903 817
- DE-A1-102005 039 557

## Beschreibung

Die Erfindung bezieht sich auf eine elektrische Kühlmittelpumpe zur Versorgung eines Antriebsmotors mit einem flüssigen Kühlmittel, beispielsweise mit Kühlwasser.

Der Antriebsmotor einer elektrischen Kühlmittelpumpe wird häufig als sogenannter Spaltrohrmotor ausgeführt, bei dem der Motorrotor in einem Nassraum angeordnet ist, in dem er durch das Kühlmittel umspült wird. Der Nassraum wird durch einen Spaltrohrkörper von dem zirkulären Trockenraum getrennt, in dem die außenseitigen Statorspulen angeordnet sind. Zur leichteren Montage sind die Statorspulen auf einem separaten Spulenträger montiert, der auf den Spaltrohrkörper aufgeschoben und mit diesem in einer bestimmten rotatorischen Position dauerhaft verbunden werden muss. In diesem Zusammenhang müssen ferner die Spulenleitungen, also die Anschlussleitungen der Statorspulen, definiert und zuverlässig elektrisch isoliert von den Statorspulen zu der Motorelektronik geführt werden.

Aus DE 4441378 A1 ist eine durch einen Wechselstrommotor elektrisch angetriebene Flüssigkeitspumpe bekannt.

Aus DE 19903817 A1 ist eine elektrisch angetriebene Kühlwasserpumpe bekannt, die durch einen DC-Motor angetrieben wird.

Aus DE 102005039557 A1 ist ebenfalls eine elektrische Kfz-Kühlmittelpumpe bekannt, die durch einen DC-Motor angetrieben wird. Aufgabe der Erfindung ist es, eine einfach montierbare elektrische Kühlmittelpumpe mit einem Spaltrohrkörper und einem Spulenträger zu schaffen.

Diese Aufgabe wird erfindungsgemäß gelöst mit einer elektrischen Kühlmittelpumpe mit den Merkmalen des Anspruchs 1.

Die elektrische Kühlmittelpumpe weist eine Pumpensektion und einen elektronisch kommutierten Spaltrohr-Antriebsmotor auf. Der permanent erregte Motorrotor ist innenliegend und die Statorspulen sind außenliegend, so dass es sich um einen sogenannten Innenläufer handelt. Es ist ein Spulenträger vorgesehen, der alle Statorspulen trägt. Der Spulenträger ist beispielsweise aus Kunststoff gefertigt und kann mehrere ferromagnetische Statorbleche zur Konzentration des von den Statorspulen generierten Magnetfeldes aufweisen. Ferner ist ein separater Spaltrohrkörper vorgesehen, der beispielsweise als im Wesentlichen zylindrischer Kunststoffkörper ausgebildet sein kann. Der Spaltrohrkörper trennt einen Kühlmittelraum, in dem der Motorrotor in dem flüssigen Kühlmittel rotiert, von einem ringförmigen Trockenraum radial außerhalb des Spaltrohrkörpers, in dem der Spulenträger mit den Statorspulen angeordnet ist. An einem der Pumpensektion bzw. dem Pumpenrotor gegenüberliegenden Längsende der Kühlmittelpumpe ist die Motorelektronik zur Bestromung der Statorspulen vorgesehen.

An dem Spaltrohrkörper und an dem Spulenträger sind zueinander komplementäre Formschlussmittel vorgesehen, die eine eindeutige rotatorische und axiale Positionierung des Spulenträgers zu dem Spaltrohrkörper sicherstellen. Hierdurch wird bei der Montage eine fehlerhafte rotatorische und/oder axiale Positionierung des Spulenträgers auf dem Spaltrohrkörper ausgeschlossen. Der Spulenträger ist außen auf den Spaltrohrkörper aufgeschoben.

Ferner ist an dem Spaltrohrkörper mindestens eine axiale Leitungshülse vorgesehen, durch die eine oder mehrere Spulenleitungen elektrisch isoliert und definiert geführt von den Statorspulen zu der Motorelektronik geführt wird bzw. werden. Da die Leitungshülse und die darin geführten Spulenleitungen rotatorisch exakt mit der Motorelektronik ausgerichtet sein müssen, stellt die Kombination
aus Formschlussmitteln einerseits und der axialen Leitungshülse andererseits sicher, dass die Montage des Spulenträgers, des Spaltrohrkörpers und der Motorelektronik exakt miteinander ausgerichtet erfolgt. Die Leitungshülse sorgt ferner dafür, dass die Statorleitungen zuverlässig isoliert sind gegenüber einem Motorgehäuse, Elektronikgehäuse bzw. Pumpengehäuse aus einem ggf. elektrisch leitenden Material.

Vorzugsweise ist die Leitungshülse einstückig mit dem aus Kunststoff gefertigten Spaltrohrkörper ausgebildet. Wegen der einfachen Form des Spaltrohrkörpers stellt es spritzgusstechnisch kein unüberwindbares Problem dar, die im Wesentlichen axial verlaufende Leitungshülse einstückig mit dem Spaltrohrkörper auszubilden. Durch die Einstückigkeit von Leitungshülse und Spaltrohrkörper werden Montageschritte eingespart und eine fehlerfreie Montage sichergestellt.

Gemäß einer bevorzugten Ausgestaltung sind an dem Spaltrohrkörper einerseits und an dem Spulenträger andererseits Rastmittel zur axialen Verrastung ausgebildet. Durch die Rastmittel wird eine sichere vorläufige bzw. endgültige insbesondere axiale Fixierung des Spulenträgers an dem Spaltrohrkörper sichergestellt. Die axiale Fixierung durch die Rastmittel ist auch bedeutend für die in der Leitungshülse steckende Spulenleitung, da diese bei axialen Relativbewegungen zwischen dem Spulenträger und dem Spaltrohrkörper unter Umständen knicken oder sogar reißen könnte.

Gemäß einer alternativen oder ergänzenden Ausführungsform sind die Formschlussmittel für eine unverlierbare endgültige Fixierung nach dem Zusammenfügen des Spulenträgers und des Spaltrohrkörpers zur Herstellung einer unverlierbaren Fixierung umgeformt, beispielsweise kalt gequetscht oder warum umgeformt.

Vorzugsweise weist der Spulenträger eine axiale Leitungsaufnahme auf, die mit der korrespondierenden Leitungshülse axial fluchtet. Die betreffende Spulenleitung ist also bereits auf dem Spulenträger axial exakt mit der korrespondierenden Leitungshülse an dem Spaltrohrkörper ausgerichtet. Axiale Relativbewegungen zwischen dem Spaltrohrkörper und dem Spulenträger sind daher praktisch unschädlich und können nicht zu einem Durchscheuern der betreffenden Spulenleitung führen.

Im Folgenden werden unter Bezugnahme auf die Zeichnungen mehrere Ausführungsbeispiele der Erfindung näher erläutert. Es zeigen:
Figur 1 einen Längsschnitt einer elektrischen Kühlmittelpumpe,
Figur 2 eine perspektivische Ansicht eines Spulenträgers und eines Spaltrohrkörpers der Kühlmittelpumpe der Figur 1,
Figur 3 eine weitere perspektivische Ansicht des Spulenträgers und des Spaltrohrkörpers der Kühlmittelpumpe der Figur 1,
Figur 4 eine perspektivische Ansicht des Spaltrohrkörpers der Kühlmittelpumpe der Figur 1,
Figur 5 ein zweites Ausführungsbeispiel eines Spulenträgers und eines Spaltrohrkörpers mit alternativen Formschlussmitteln, und
Figur 6 ein weiteres Ausführungsbeispiel eines Spulenträgers und eines Spaltrohrkörpers mit einer dritten Variante der Formschlussmittel.

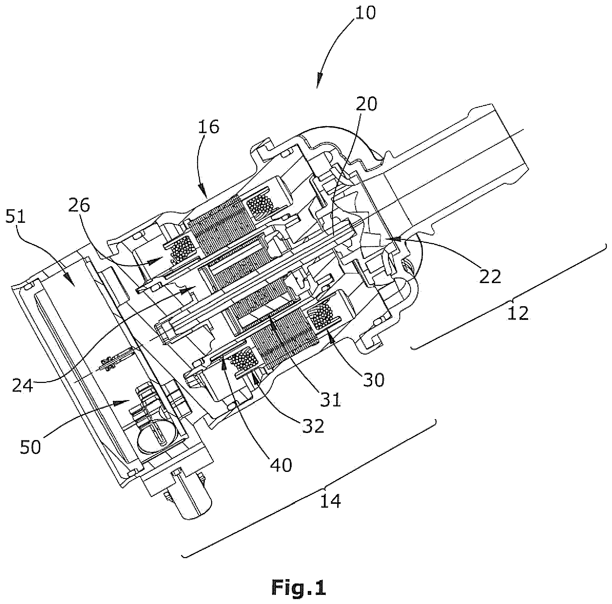

In der Figur 1 ist eine elektrische Kühlmittelpumpe 10 im Längsschnitt dargestellt. Die Kühlmittelpumpe 10 dient der Versorgung eines Fahrzeug-Antriebsmotors, beispielsweise eines Verbrennungsmotors, und von Nebenaggregaten, wie einer Batterie, eines E-Motors, eines
Ladeluftkühlers, ect. mit einem flüssigen Kühlmittel, beispielsweise mit Kühlwasser. Die Kühlmittelpumpe 10 kann axial in eine Pumpensektion 12 mit einem Pumpenrotor 22 und eines Sektion mit einen Spaltrohr-Antriebsmotor 14 aufgeteilt werden, in dem ein Motorrotor 31, mehrere Statorspulen 32 und eine Motorelektronik 50 angeordnet sind.

Der Antriebsmotor 14 ist als sogenannter Spaltrohr-Antriebsmotor 14 ausgebildet, der einen innenliegenden Kühlmittelraum 24 und einen außenliegenden Trockenraum 26 aufweist. Der Kühlmittelraum 24 und der Trockenraum 26 sind durch einen im Wesentlichen zylindrisch geformten Kunststoff- Spaltrohrkörper 40 voneinander getrennt. Der Motorrotor 31 ist durch einen oder mehrere integrierte Permanentmagnete permanentmagnetisch erregt und wird durch zirkulierende Magnetfelder in Drehung versetzt, die durch die Statorspulen 32 generiert werden.

Die Statorspulen 32 sind über in der Figur 1 nicht dargestellte Spulenleitungen 49 mit der Motorelektronik 50 verbunden, die an dem der Pumpensektion 12 gegenüberliegenden Längsende der Kühlmittelpumpe 10 angeordnet ist. Die Motorelektronik 50 besteht im Wesentlichen aus einer Platine auf der sowohl die Steuerungselektronik als auch die Leistungselektronik zum Ansteuern der Statorspulen 32 angeordnet ist. Die Motorelektronik 50 ist mit einem separaten und fluidisch abgeschirmten Motorelektronik-Raum 51 angeordnet.

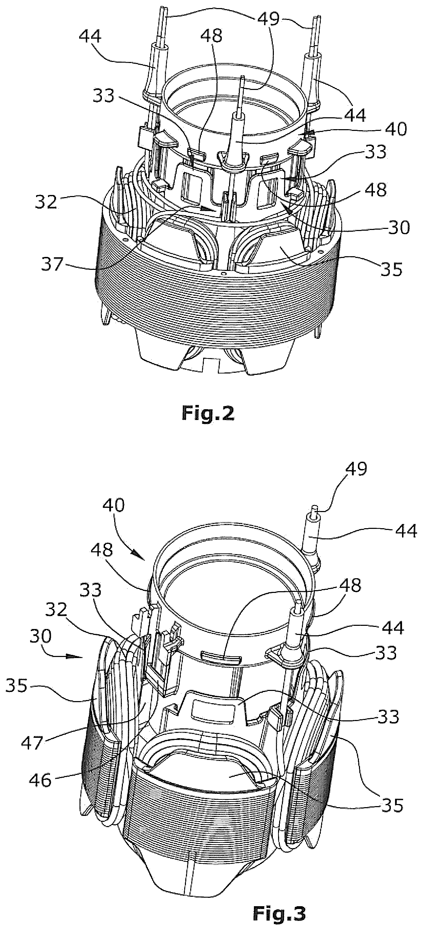

In den Figuren 2-4 ist eine erste Ausführungsform der Kombination aus dem Spaltrohrkörper 40 und einem Spulenträger 30 im Detail dargestellt. Der Spulenträger 30 besteht aus Kunststoff und weist eine Spulentragstruktur 35 auf, auf die die Statorspulen 32 aufgewickelt sind. Der Spaltrohrkörper 40 weist einen zylindrischen Rohrkörper 42 auf, an dessen der Motorelektronik 50 zugewandten Längsende ein Formschlussmittel 46 angeordnet ist, das zusammen mit einem entsprechenden komplementären Formschlussmittel 47 des Spulenträgers 30 derart zusammenwirkt, dass der Spulenträgers 30 bei einem einphasigen Motor nur in einer einzigen eindeutigen rotatorischen und axiale Positionierung zu dem Spaltrohrkörper 40 montiert werden kann, wie insbesondere aus Figur 3 deutlich wird. In Figur 3 sind der Spulenträger 30 und der Spaltrohrkörper 40 kurz vor der endgültigen Montageposition beim Montagevorgang dargestellt, also während der axialen Montagebewegung des Spulenträgers 30 im Verhältnis zu dem Spaltrohrkörper 40.

Der Spaltrohrkörper 40 weist ein Rastmittel 48 auf, das mit einem korrespondierenden Rastmittel 33 des Spulenträgers 30 in der Montageposition axial verrastend zusammenwirkt, wie in der Figur 2 dargestellt ist. Das Spaltrohrkörper-Rastmittel 48 ist als feststehender Rastkeil ausgebildet, wohingegen das Spulenträger-Rastmittel 33 als elastische Rastzunge ausgebildet ist, die eine Zungenöffnung für den Eingriff des Rastkeils aufweist und in radialer Richtung federnd ausgebildet ist. Die Rastmittel wirken auch als Formschlussmittel.

Der Spaltrohrkörper 40 weist zwei, oder alternativ drei, axiale Leitungshülsen 44 auf, durch die jeweils eine oder mehrere Spulenleitungen 49 axial hindurchgeführt sind. Die Leitungshülsen 44 dienen zum Einen der exakten Führung der Spulenleitungen 49 zwischen den Statorspulen 32 der Motorelektronik 50, und dienen zum Anderen dem mechanischen Schutz und der elektrischen Isolation der Spulenleitungen 49 gegenüber einem Außengehäuse 16, das beispielsweise aus Metall bestehen kann. Die Leitungshülsen 44 können jeweils einen axialen Längsschlitz 45 über die gesamte Hülsenlänge aufweisen, durch den sich die zugeordnete Spulenleitung (49) radial in die Leitungshülse einsetzen lässt. An dem Spulenträger 30 ist eine axiale Leitungsaufnahme 37 vorgesehen, die axial exakt fluchtet mit der Leitungshülse 44. In die klammerartig ausgebildete und radial außen geöffnete Leitungsaufnahme 37 sind die betreffenden Spulenleitungen 49 eingelegt, die anschließend durch die korrespondierende Leitungshülse 44 hindurch geführt sind.

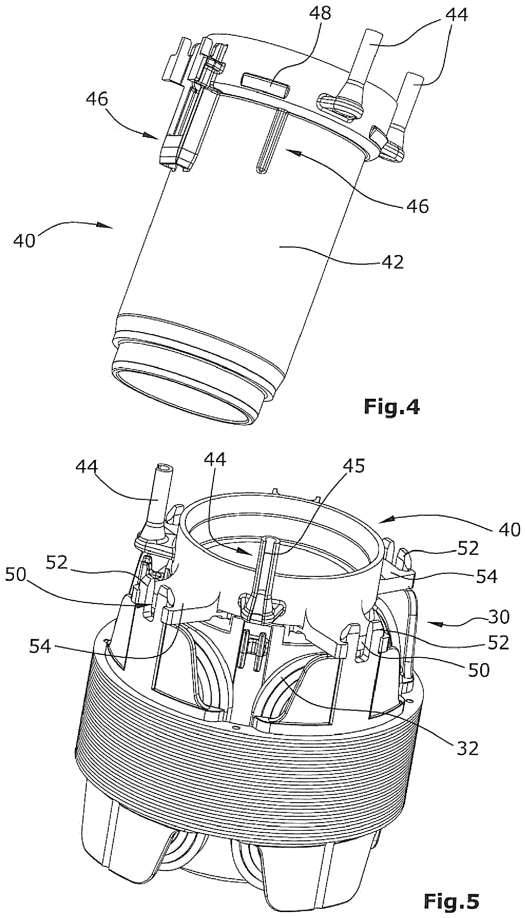

In der Figur 5 ist eine alternative Ausführungsform der rastenden Formschlussmittel dargestellt. Das Formschlussmittel 50 des Spaltrohrkörpers 40 besteht aus einem in einer Radialebene liegenden Radialsteg 54, der eine hinterschnittene Rastöffnung 50 aufweist, in die zwei entsprechend hinterschnittene Rastzungen 52 verrastend eingesteckt sind. Die Rastzungen 52 sind in Umfangsrichtung federnd ausgebildet.

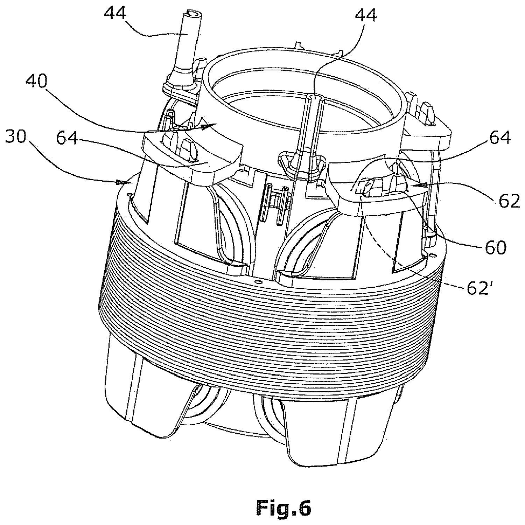

In der Figur 6 ist eine weitere Ausführungsform der rastenden Formschlussmittel dargestellt. Das Formschlussmittel 60 des Spaltrohrkörpers 40 besteht auch hier aus einem in einer Radialebene liegenden Radialsteg 64, der eine Fixieröffnung 60 aufweist, in die ein entsprechender Axialsteg 62 des Spulenträgers 30 eingeschoben ist. Nachdem der Axialsteg 62 eingeschoben ist, wird er zu einem umgeformten Axialsteg 62' warm umgeformt, um auf diese Weise einen unlösbaren Formschluss herzustellen.

## Patentansprüche

1. Elektrische Kühlmittelpumpe (10) mit einer Pumpensektion (12) und einem elektronisch kommutierten Spaltrohr- Antriebsmotor (14), der aufweist:
einen innenliegenden Motorrotor (31) und außenliegende Statorspulen (32),
einen Spulenträger (30), der alle Statorspulen (32) trägt,
eine Motorelektronik (50), die an dem der Pumpensektion (12) gegenüberliegenden Längsende der Kühlmittelpumpe (10) angeordnet ist, und
einen separaten Spaltrohrkörper (40), der einen Kühlmittelraum (24), in dem der Motorrotor (31) angeordnet ist, von einem Trockenraum (26) trennt, in dem der Spulenträger (30) mit den Statorspulen (32) angeordnet ist, wobei
der Spaltrohrkörper (40) und der Spulenträger (30) komplementäre Formschlussmittel (33,48;50,52;60,62) aufweisen, die eine eindeutige rotatorische und axiale Positionierung des Spulenträgers (30) zu dem Spaltrohrkörper (40) gewähren, **dadurch gekennzeichnet, dass** das Formschlussmittel (33, 50, 60) des Spaltrohrkörpers (40) außenseitig am Spaltrohrkörper (40) angeordnet ist, und dass der Spaltrohrkörper (40) mindestens eine axiale Leitungshülse (44) aufweist, durch die eine Spulenleitung (49) führt, und die der Führung der Spulenleitung (49) zwischen den Statorspulen (32) und der Motorelektronik (50) dient.

2. Elektrische Kühlmittelpumpe (10) nach Anspruch 1, wobei die Leitungshülse (44) einstückig mit dem aus Kunststoff gefertigten Spaltrohrkörper (40) ausgebildet ist.

3. Elektrische Kühlmittelpumpe (10) nach einem der vorangegangenen Ansprüche, wobei die Formschlussmittel (33,40;50,52) an dem Spaltrohrkörper (40) und dem Spulenträger (30) als Rastmittel zur axialen Verrastung ausgebildet sind.

4. Elektrische Kühlmittelpumpe (10) nach einem der vorangegangenen Ansprüche, wobei die Formschlussmittel (62) für eine unverlierbare Fixierung umgeformt sind.

5. Elektrische Kühlmittelpumpe (10) nach einem der vorangegangenen Ansprüche 2-5, wobei der Spulenträger (30) eine axiale Leitungsaufnahme (37) aufweist, die mit der korrespondierenden Leitungshülse (44) axial fluchtet.

6. Elektrische Kühlmittelpumpe (10) nach einem der vorangegangenen Ansprüche, wobei die Leitungshülse (44) einen Längsschlitz (45) aufweist.

## Claims

1. Electric coolant pump (10) with a pump section (12) and an electronically commutated canned drive motor (14) which comprises:
an internal motor rotor (31) and external stator coils (32),
a coil carrier (30) carrying all of the stator coils (32),
motor electronics (50) arranged at a longitudinal end of the coolant pump (10) that is opposite the pump section (12), and
a separate can body (40) separating a coolant space (24) in which the motor rotor (31) is arranged from a dry space (26) in which the coil carrier (30) with the stator coils (32) is arranged, wherein
the can body (40) and the coil carrier (30) comprise complementary form-fitting means (33, 48; 50, 52; 60, 62) that ensure an unambiguous rotational and axial positioning of the coil carrier (30) with respect to the can body (40),
**characterized in that**
the form-fitting means (33, 50, 60) of the can body (40) is arranged on the outer side of the can body (40), and that the can body (40) has at least one axial cable sleeve (44) through which a coil cable (49) passes and which serves to guide the coil cable (49) between the stator coils (32) and the motor electronics (50).

2. Electric coolant pump (10) of claim 1, in which the cable sleeve (44) is formed integrally with the can body (40) made of plastic material.

3. Electric coolant pump (10) of one of the preceding claims, in which the form-fitting means (33, 48; 50, 52) on the can body (40) and the coil carrier (30) are configured as latching means for axial latching.

4. Electric coolant pump (10) of one of the preceding claims, in which the form-fitting means (62) are reworked for captive fixation.

5. Electric coolant pump (10) of one of the preceding claims 2 - 5, in which the coil carrier (30) has an axial cable support (37) in axial alignment with the corresponding cable sleeve (44).

6. Electric coolant pump (10) of one of the preceding claims, in which the cable sleeve (44) has a longitudinal slot (45).

## Revendications

1. Pompe (10) à liquide de refroidissement électrique avec une section de pompe (12) et un moteur d'entrainement à gaine (14) commutable électroniquement comprenant:
un rotor de moteur (31) interne et des bobines de stator (32) externes,
un porte-bobine (30) portant toutes les bobines de stator (32),
une électronique du moteur (50) disposée à l'extrémité longitudinale de la pompe (10) à liquide de refroidissement, opposée à la section de pompe (12), et
un corps de gaine (40) séparant un espace (24) de liquide de refroidissement, dans lequel est disposé le rotor de moteur (31), d'un espace (26) sec, dans lequel est disposé le porte-bobine (30) avec les bobines de stator (32), où
le corps de gaine (40) et le porte-bobine (30) comprennent des moyens de liaison par complémentarité des formes (33, 48; 50, 52; 60, 62) complémentaires l'un à l'autre, assurant un positionnement rotatif et axial univoque du porte-bobine (30) par rapport au corps de gaine (40),
**caractérisée en ce que**
le moyen de liaison par complémentarité des formes (33, 50, 60) du corps de gaine (40) est disposé à l'extérieur du corps de gaine (40), et que le corps de gaine (40) comprend au moins un manchon de câble (44) axial traversé par un câble de bobine (49), et qui sert à guider le câble de bobine (49) entre les bobines de stator (32) et l'électronique du moteur (50).

2. Pompe (10) à liquide de refroidissement selon la revendication 1, dans laquelle le manchon de câble (44) est formé d'un seul tenant avec le corps de gaine (40) fabriqué de matière plastique.

3. Pompe (10) à liquide de refroidissement selon l'une quelconque des revendications précédentes, dans laquelle les moyens de liaison par complémentarité des formes (33, 48; 50, 52) sont formés sur le corps de gaine (40) et le porte-bobine (30) comme moyens d'encliquetage pour le verrouillage axial.

4. Pompe (10) à liquide de refroidissement selon l'une quelconque des revendications précédentes, dans laquelle les moyens de liaison par complémentarité des formes (62) sont formés pour une fixation imperdable.

5. Pompe (10) à liquide de refroidissement selon l'une quelconque des revendications précédentes 2 - 5, dans laquelle le porte-bobine (30) comprend un logement de ligne (37) aligné axialement sur le manchon de câble (44) correspondant.

6. Pompe (10) à liquide de refroidissement selon l'une quelconque des revendications précédentes, dans laquelle sur le manchon de câble (44) présent une fente longitudinale (43).
